Europäisches Patentamt

European Patent Office

Office européen des brevets

(11) Veröffentlichungsnummer: **0 280 942**
A2

## (12) EUROPÄISCHE PATENTANMELDUNG

(21) Anmeldenummer: 88102020.0

(22) Anmeldetag: **11.02.88**

(51) Int. Cl.⁴: **B60H 1/32** , F25D 21/14 , F02M 37/20

(30) Priorität: **28.02.87 DE 3706546**

(43) Veröffentlichungstag der Anmeldung:
**07.09.88 Patentblatt 88/36**

(84) Benannte Vertragsstaaten:
**FR GB IT SE**

(71) Anmelder: **BAYERISCHE MOTOREN WERKE
Aktiengesellschaft
Postfach 40 02 40 Petueiring 130 - AJ-36
D-8000 München 40(DE)**

(72) Erfinder: **Zenker, Hermann
Zeppelinstrasse 18 a
D-8938 Buchloe(DE)**

(74) Vertreter: **Bücken, Helmut et al
Bayerische Motoren Werke
Aktiengesellschaft Postfach 40 02 40
Petueiring 130 - AJ-30
D-8000 München 40(DE)**

(54) **Auffangschale für das am Verdampfer einer Fahrzeug-Klimaanlage anfallende Kondenswasser.**

(57) Ein Kraftfahrzeug mit Klimaanlage weist eine Auffangschale für das sich am Verdampfer bildende Kondenswasser auf. Diese Auffangschale bzw. das darin befindliche Kondenswasser steht mit zu kühlenden Medien oder Bauteilen des Fahrzeuges in thermischer Verbindung. Auf diese Weise wird die Kälteenergie des Kondenswassers zu Kühlzwecken genutzt. Dazu kann beispielsweise die Kraftstoffrückführleitung durch die Auffangschale geleitet werden. Alternativ tauchen Wärmerohre in den Kondenswasserspiegel der Auffangschale oder wird dieses Kondenswasser den zu kühlenden Bauteilen zwecks Verdunstung auf der Bauteiloberfläche zugeführt.

Fig. 1

## Auffangschale für das am Verdampfer einer Fahrzeug-Klimaanlage anfallende Kondenswasser.

Die Erfindung bezieht sich auf eine Auffangschale für das am Verdampfer einer Fahrzeug-Klimaanlage anfallende Kondenswasser. Eine derartige Auffangschale ist beispielsweise in der DE-PS 34 36 539 beschrieben und wird vorgesehen, um das sich am Verdampfer bildende Kondenswasser gezielt abzuleiten und so zu verhindern, daß sich dieses an den Lamellen des dem Verdampfer meist nachgeschalteten Heizungswärmetauschers absetzt. Dabei ist die Auffangschale meist mit einem Ablaufstutzen versehen, über welchen das aufgefangene Kondenswasser einfach in die Umgebung austritt.

Dieses Kondenswasser weist zwar in Abhängigkeit von der tatsächlichen Kälteleistung der Klimaanlage unterschiedliche, jedoch im allgemeinen ziemlich niedrige Temperaturen auf. Da zudem Fahrzeug-Klimaanlagen meist nur bei hohen Umgebungstemperaturen betrieben werden, wird das zunächst in der Schale aufgefangene und dann in die Umgebung abgeleitete Kondenswasser in relativ kurzer Zeit verdunsten. Insgesamt betrachtet geht dadurch jedoch eine Teilmenge der von der Klimaanlage erbrachten Kälteleistung ungenutzt verloren.

Aufgabe der vorliegenden Erfindung ist es daher, einen Teil der sich im Kondenswasser eines Klimaanlagenverdampfers einer Fahrzeug-Klimaanlage befindlichen Kälteenergie zurückzugewinnen.

Diese Aufgabe wird durch die kennzeichnenden Merkmale des ersten Anspruchs gelöst.

Steht die Auffangschale bzw. das darin befindliche Kondenswasser mit anderen zu kühlenden Medien oder Bauteilen des Fahrzeuges in thermischer Verbindung, so wird die im Kondenswasser gespeicherte Kälteenergie dazu verwendet, um diese entsprechenden Bauteile bzw. Medien zu kühlen. Im einfachsten Fall ist es beispielsweise denkbar, daß ein zu kühlendes Bauteil vollständig oder zumindest teilweise in den sich in der Auffangschale befindlichen Kondenswasserspiegel hineintaucht. Mußten bislang derartige Bauteile mit aufwendigen Kühlrippen versehen werden, um zumindest einen geringen Wärmeübergang zwischen dem Bauteil und der Umgebungsluft sicherzustellen, so kann nun jenes Bauteil in seiner Außenform einfacher gestaltet werden, da das kalte Kondenswasser für eine ausreichende Kühlung sorgt.

Ein wesentlicher Faktor dieses Kühleffektes ist die Tatsache, daß stets eine Teilmenge von Kondenswasser in der Auffangschale verdunsten wird. Somit steht zu Kühlzwecken nicht nur das Temperaturgefälle zwischen dem zu kühlenden Bauteil und dem Kondenswasser zur Verfügung, sondern es kann zusätzlich die ein wesentlich höheres Energiepotential aufweisende Verdunstungskälte genutzt werden.

Dazu muß die mit der Umgebungsluft in Verbindung stehende Oberfläche des Kondenswasserspiegels in ihrer Größe der erforderlichen Kühlleistung angepaßt werden; ein Ablaufstutzen an der Auffangschale kann hierbei selbstverständlich entfallen bzw. muß einen relativ geringen und entsprechend angepaßten Öffnungsquerschnitt aufweisen. Die erforderlichen geometrischen Abmessungen können dabei durch Berechnungen oder einige Versuchsreihen ermittelt werden.

Vorteilhafte Weiterbildungen der vorliegenden Erfindung beschreiben die Unteransprüche.

So kann ein im Fahrzeug strömendes Medium besonders einfach dann gekühlt werden, wenn dieses in Rohren oder dgl. durch die Auffangschale geführt wird. Auch kann der Boden der Auffangschale beispielsweise mit meanderförmig angeordneten Rohren versehen oder als doppelter Boden, zwischen welchem das entsprechende Medium geführt ist, ausgebildet sein. Besonders vorteilhaft ist eine derartige Anordnung beispielsweise zur Kühlung der von der Fahrzeug-Brennkraftmaschine zum Kraftstoffvorratsbehälter rücklaufenden Kraftstoffmenge; diese ohnehin vorhandene Kraftstoffleitung muß dazu einfach durch die Auffangschale gelegt werden; ein heute üblicher separater und vom Kältemittel der Klimaanlage durchströmter Fluid-Fluid-Wärmetauscher für diese rücklaufende Kraftstoffmenge kann somit entfallen.

Nach Anspruch 3 kann das sich in der Auffangschale sammelnde Kondenswasser aber auch den zu kühlenden Bauteilen zugeführt werden. Eine derartige Ausführung empfiehlt sich beispielsweise dann, wenn die entsprechenden Bauteile aus irgendwelchen Gründen nicht so angeordnet werden können, daß sie zumindest teilweise in den Kondenswasserspiegel der Auffangschale hineintauchen. Zur verbesserten Verdunstung können die entsprechenden Bauteile dazu mit vergrößerten vom Kondenswasser benetzten Oberflächen, welche eventuell saugfähig ausgeführt und gut mit Umgebungsluft in Verbindung stehend angeordnet sind, ausgeführt werden. Desweiteren können nahe jener Bauteile auch Zusatzgebläse vorgesehen sein.

Eine weitere vorteilhafte Möglichkeit zur thermischen Verbindung nennt Anspruch 4 in Form eines an sich bekannten Wärmerohres. Dessen Wirkungsgrad wird jedoch deutlich erhöht, wenn es nicht wie bisher üblich die aufgenommene Wärmemenge an die Umgebung abgibt, sondern die Kälteenergie des Verdampfer-Kondenswassers aufzunehmen vermag.

Im folgenden wird die vorliegende Erfindung anhand zweier nur schematisch dargestellter bevorzugter Ausführungsbeispiele näher beschrieben. Es zeigt:

Fig. 1 die Prinzipskizze eines Fahrzeuges mit Klimaanlage und Kondenswasser-Auffangschale nach Anspruch 2, sowie

Fig. 2 die Prinzipskizze eines Fahrzeuges mit Klimaanlage und Kondenswasser-Auffangschale nach Anspruch 3.

Ein Kraftfahrzeug 1 ist mit einer Klimaanlage ausgerüstet, von welcher nur der Verdampfer 2 dargestellt ist. Verflüssigtes entspanntes Kältemittel durchströmt diesen Verdampfer 2 und kühlt dabei die in Pfeilrichtung 3 von der Umgebung in den Fahrzeug-Innenraum eintretende Luft ab. Dabei wird aus der warmen Umgebungsluft Feuchtigkeit abgeschieden, welche sich in Form von Kondenswasser am Verdampfer 3 niederschlägt. Dieses längs des Verdampfers 3 ablaufende Kondenswasser wird in einer Auffangschale 4 gesammelt. In dieser Kondenswassermenge ist - wie bereits oben erläutert - nicht nur aufgrund des vorhandenen Temperaturgefälles gegenüber der Umgebung bzw. anderen Bauteilen oder Medien, sondern auch aufgrund des gebundenen Verdunstungspotentials eine nicht unerhebliche Kälteenergie enthalten.

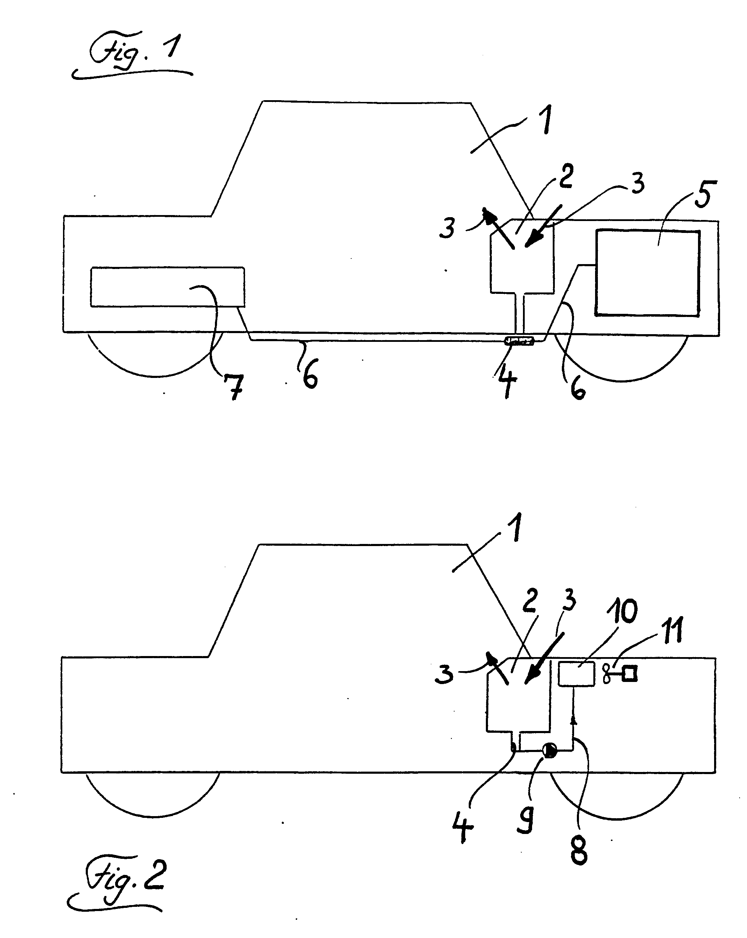

Fig. 1 zeigt eine mögliche Variante zur Nutzung dieser Kälteenergie. Wie bei Kraftfahrzeugen mit Brennkraftmaschinen allgemein üblich, wird die von der Brennkraftmaschine 5 nicht benötigte Kraftstoffmenge zur Verhinderung von Dampfblasenbildung im Kraftstoffsystem über eine Rückführleitung 6 in den Kraftstoffvorratsbehälter 7 zurückgeführt. Zweckmäßig ist dabei eine Kühlung dieser Kraftstoffmenge, da sich diese in der Umgebung der Brennkraftmaschine 5 um einen nicht unerheblichen Betrag erwärmt hatte. Für diesen Kühlvorgang kann das sich in der Auffangschale 4 befindliche Kondenswasser besonders einfach herangezogen werden, wenn die Rückführleitung - eventuell meanderförmig gewunden - durch die Auffangschale 4 führt. Hierbei kühlt sich der Kraftstoff ausreichend ab, während die vom Kraftstoff an das Kondenswasser abgegebene Wärmemenge dessen Verdunstung beschleunigt.

Eine andere Variante zur Nutzung der im Kondenswasser gespeicherten Kälteenergie zeigt Fig. 2. Dabei wird das Kondenswasser über eine Förderleitung 8 ausgehend von der Auffangschale 4 mittels einer Förderpumpe 9 einem zu kühlenden Bauteil 10, beispielsweise dem Gehäusekasten der zentralen Steuerungselektronik zugeführt. Dort wird das Kondenswasser über die Gehäuseoberfläche geführt und bewirkt somit eine deutliche Abkühlung dieses Bauteiles. Zur Unterstützung insbesondere des Verdunstungsprozesses kann ein zusätzliches Gebläse 11 vorgesehen sein.

Die tatsächliche konstruktive Ausgestaltung der hier erwähnten Bauteile (Verdampfer, Auffangschale, Förderleitungen, usw.) ist für die vorliegende Erfindung unerheblich, wesentlich ist die Tatsache, die Auffangschale bzw. das darin befindliche Kondenswasser mit zu kühlenden Medien oder Bauteilen des Fahrzeuges in thermische Verbindung zu bringen.

**Ansprüche**

1. Auffangschale für das am Verdampfer einer Fahrzeug-Klimaanlage anfallende Kondenswasser, dadurch gekennzeichnet, daß die Auffangschale (4) bzw. das darin befindliche Kondenswasser mit zu kühlenden Medien oder Bauteilen (10) des Fahrzeuges (1) in thermischer Verbindung steht.

2. Auffangschale nach Anspruch 1, dadurch gekennzeichnet, daß das zu kühlende Medium in Rohren (6) oder dgl. durch die Auffangschale (4) geleitet wird.

3. Auffangschale nach Anspruch 1 oder 2, dadurch gekennzeichnet, daß das in der Auffangschale (4) befindliche Kondenswasser den zu kühlenden Bauteilen (10) zugeführt wird.

4. Auffangschale nach einem der vorangegangenen Ansprüche, dadurch gekennzeichnet, daß die freien Enden von Wärmerohren, welche an den zu kühlenden Bauteilen angeordnet sind, in die Auffangschale hineinreichen.

*Fig. 1*

*Fig. 2*